# FASCICULE DE BREVET EUROPEEN

(11) **EP 1 120 038 B1**
(45) Date de publication et mention de la délivrance du brevet: **15.09.2004**
(21) Numéro de dépôt: 01460006.8
(22) Date de dépôt: 25.01.2001
(51) Int. Cl.: A01K 61/00

(54) **Dispositif de stockage et de dégorgement des coquillages et crustacés**
Vorrichtung zum Lagern und Entwässern von Schalen- und Krustentieren
Device for storing and draining shellfish and crustaceans

(30) Priorité: 27.01.2000 FR 0001023
(43) Date de publication de la demande: 01.08.2001
(73) Titulaire: Pompes, Josselin (Ltd), 35960 Le Vivier s/Mer (FR)
(72) Inventeur: Josselin, Jean Jacques, 35960 Le Vivier Sur Mer (FR)
(74) Mandataire: Branger, Jean-Yves

(56) Documents cités:
- US-A- 3 192 899
- US-A- 4 537 149
- US-A- 4 653 429
- US-A- 5 186 121
- US-A- 5 249 548

## Description

La présente invention concerne un dispositif de stockage et de dégorgement des coquillages, crustacés et autres permettant ainsi de pouvoir les garder tout en les purifiants plusieurs jours, ainsi que du procédé utilisant le dit dispositif

Le stockage et la purification sont traditionnellement effectués dans les bassins ou viviers alimentés en eau de mer continuellement, ou ponctuellement une oxygénation est assuré par micro bullage du type Venturi, ou par dispersion d'air surpressé au fond desdits bassins ou par cascade circulation d'eau, ou par tubes en U qui provoquent des sursaturations en azote. Un de ces systèmes d'oxygénation est obligatoire dans les deux cas de figure.

Lorsque l'alimentation d'eau de mer est ponctuelle, on remarque qu'il est obligatoire de rajouter un système de filtration à l'installation. Celui-ci peut être mécanique, ou gravitaire, ou inversé, ou rapide sous pression. Ces procédés de filtration sont généralement associés à un système de thermorégulation réglé en fonction des différentes espèces de coquillages ou crustacés stockès.

La purification se fera selon differents systèmes U.V, ou ozone ou chlore. Ces différents systèmes traditionnels présentent plusieurs défaut:
- Généralement, les bassins sont en béton et doivent être d'une grande capacité. Ceci implique une infrastructure et un gros oeuvre important, long, et coûteux.
- De plus sur les facteurs affectant la survie des coquillages ou crustacés, les mortalités interviennent au long de la chaîne de transports, facteurs mécaniques et biotiques ou besoins physiologiques en eau, ou besoins physiologiques hors d'eau et à des maladies.

Le brevet US-A-4 537 149 décrit une installation pour dépolluer des coquillages. Elle comprend des moyens de recirculation en circuit fermé d'eau de mer, laquelle est filtrée et traitée aux rayons UV pour éliminer les polluants. Des bacs traditionnels de stockage de coquillages sont déposés dans l'installation et immergés dans l'eau.

Le brevet US-A-3 192 899 se rapporte à un dispositif pour le stockage de coquillages, qui comprend un empilement de casiers de stockage dont le fond présente des ouvertures. Des moyens de circulation et d'aération d'eau permettent de la distribuer au sommet de la pile, se sorte qu'elle est distribuée dans de casier en casier, à travers lesdites ouvertures.

Le système de notre invention permet de remédier aux inconvénients énumérés plus haut.

Il s'agit d'un dispositif de stockage et de dégorgement des coquillages, crustacés, poissons ou autres, qui permet de les conserver et de les purifier régulièrement pendant plusieurs jours, caractérisé par le fait qu'il consiste en un réservoir d'eau à double fond ménageant un espace de sédimentation, et en ce qu'au moins deux de ses faces opposées comprennent plusieurs tubes remontant en partie haute et redescendant par un autre tube juxtaposé conduisant à sa partie basse, laquelle est munie de canalisations d'écoulement d'eau calibrées et interchangeables.

L'invention concerne également un ensemble de stockage et de dégorgement des coquillages, crustacés, poissons ou autres, qui permet de les conserver et de les purifier régulièrement pendant plusieurs jours, caractérisé par le fait qu'il consiste en un empilement de dispositifs tels que celui décrit ci-dessus, et qu'il comprend des moyens d'alimentation en eau, assurant une circulation d'eau en cascade, les eaux d'écoulement du réservoir le plus haut assurant la circulation dans ceux qui se trouvent en dessous.

Enfin, l'invention concerne un procédé d'alimentation et de circulation en eau de mer ou douce de l'ensemble de stockage et de dégorgement des coquillages, crustacés, poissons ou autres décrit ci-dessus, caractérisé en ce qu'il consiste à pomper par l'intermédiaire d'une aspiration de l'eau dans une réserve, puis la filtrer, la stériliser, à assurer sa filtration biologique, et à la réchauffer ou à la refroidir, puis à la distribuer dans ledit ensemble.
De manière avantageuse, ce procédé consiste également à injecter de l'oxygène dans l'eau.

Une ou plusieurs unités de pompage assuront l'aspiration de cette eau et la refouleront vers des filtres adaptés et calibrés en fonction des coquillages ou crustacés, selon un débit et pression optimale.

La stérilisation de cette eau de mer filtrée sera assurée par tous systèmes U.V. ou ozoneur ou autres.

Il est important de pouvoir insérer avant la distribution des containers une unité ou plusieurs de thermorégulation, adaptant ainsi une température idéale selon les coquillages ou crustacés.

Les canalisations de distribution d'eau de mer alimenteront chaque empilage en hauteur ou seul par l'intermédiaire d 'injecteurs munis de Venturi ou autres, et qui de ce fait alimentent lesdits containers.

Ce procédé comprend les solutions de circuits fermés, ouverts, ou autres.

Avec ce type de container, il est possible de charger les produits de la pêche directement en mer et de les transporter, les mettre en place sous les injecteurs, et de les stocker sans être obligé de retransvider.
* La figure (1) est une vue en coupe du container selon l'invention. Il comporte en:
   1- Alimentation d'eau.
   2- Injecteurs d'eau de mer par système Venturi ou autre.
   3- Eau tombant en cascade, donc prise d'oxygène dans l'air.
   4- Couche d'égalisation.
   5- Crue d'eau.
   6- Débordement de l'eau.
   7- Produit.
   8- Double fond.
   9- Espace de sédimentation.
   10- Ecoulement vers le container suivant la recirculation.
* La figure (2) est une vue de l'ensemble du dispositif assurant la mise en oeuvre du procédé selon l'invention. Il comporte en:
   1- Canalisation de distribution et d'alimentation d'eau
   2- Injecteurs d'eau de mer
   3- Eau tombant en cascade
   7- Produit
   11- Vannes
   12- Container
   13- eau de rejet
   14- Regard
   15- Canalisation de rejet
   16- Décanteur, dégrilleur
   17- Réserve d'eau
   18- Aspiration
   19- Pompe d'alimentation
   20- Filtre
   21- Traitement de stérilisation
   22- Filtre biologique
   23- Thermorégulation
   24- Injection d'air
* La figure (3) est une vue de côté d'une partie du dispositif, notamment la possibilité d' empiler les containers selon l' invention.
   1- Canalisation de distribution.
   2- Injecteurs d'eau
   3- Eau tombant en cascade
   10- Ecoulement vers container suivant la recirculation
   11- Vannes
   12- Container
   13- Eau de rejet
   14- Regard
   15- Canalisation de rejet

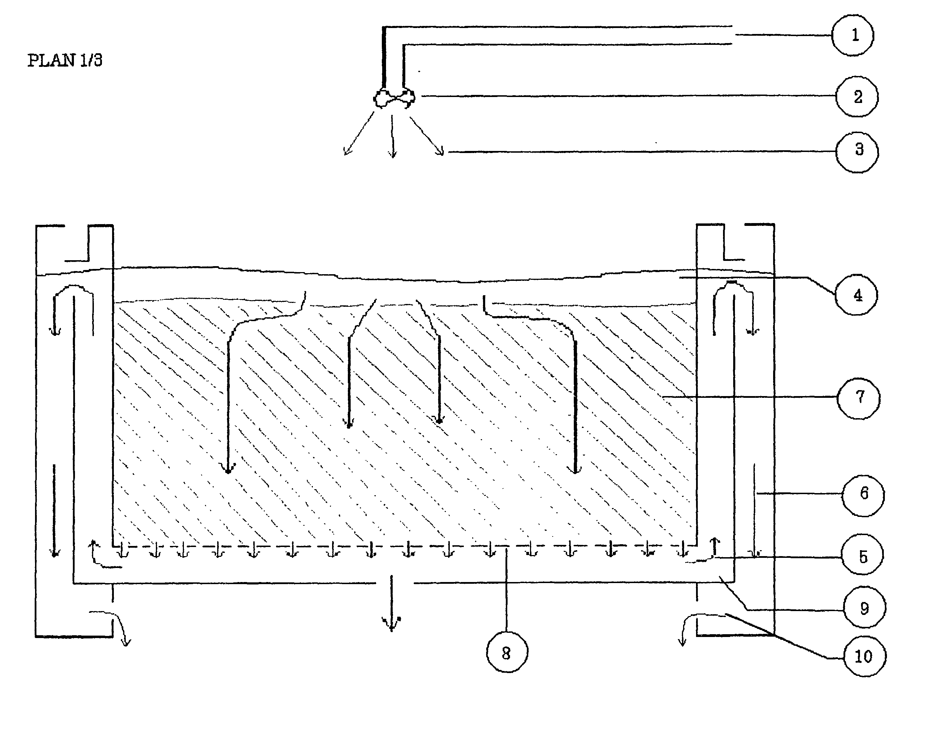

En référence aux figures de l'invention, le container (fig. 1) comporte en 1 un tube d'alimentation d'eau qui, lui même est équipé d'un injecteur d'eau avec aspiration d' air par Venturi ou autres en 2. L'eau en tombant en cascade s'oxygénera en 3, en partie haute le niveau s'égalisera automatiquement n°4. La crue d'eau venant du fond du bac n°5 créera un débordement de cette eau n°6, dans le fond du container un double fond n° 8 permettra ainsi de laisser décanter ou espace de sédimentation n° 9.L'eau qui débordera du haut redescendra par gravitation dans le tube juxtaposé à celui qui alimente la crue d'eau n° 5 et s'écoulera vers le container suivant n° 10. Les produits à stocker et décanter sont représentés en n° 7.

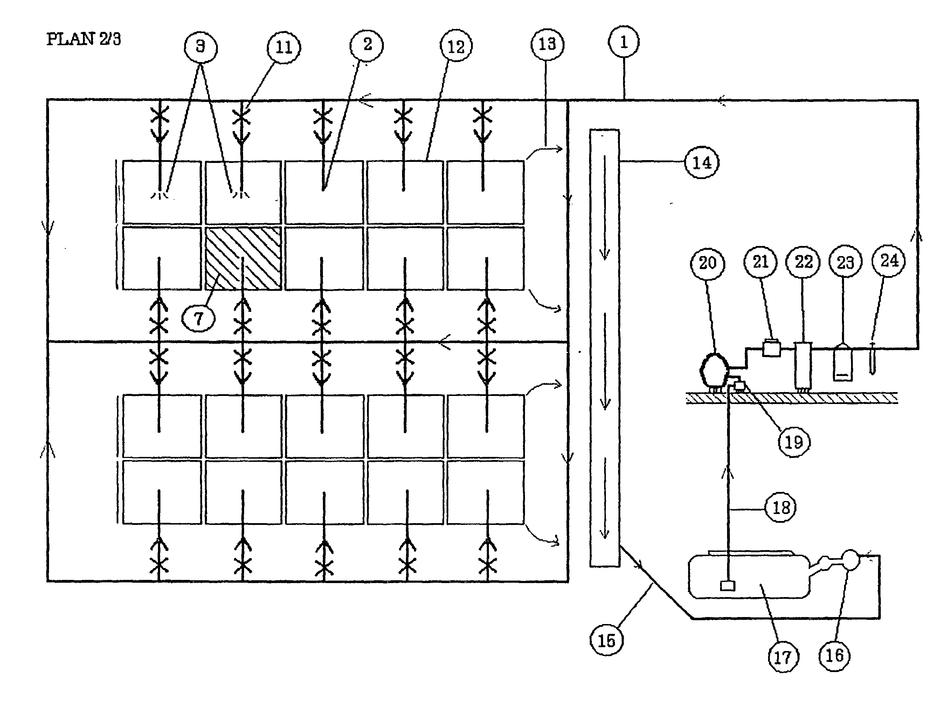

En référence aux figures de l'invention, (fig.2) comporte en 16 un décanteur dégrilleur d 'une capacité adaptée aux nombres de produits à stocker 7. Une ou plusieurs réserves dont le cubage sera calculé par rapport à l'installation n ° 17. D 'un ou plusieurs tubes d 'aspiration n° 18 .D'une ou plusieurs pompes auto-amorçantes ou non n° 19. D'un ou plusieurs filtres n°20.D'un système de stérilisation par ultra violet, ozoneur, ou autres calculé en fonction de la pompe et asservi à celle-ci n° 21.D'un ou plusieurs filtres biologiques n° 22.D'un équipement permettant de diriger la température selon les produits et la saison. Le tout asservi à la pompe au moyen d 'une horloge, pouvant ainsi reproduire le phénomène de marée n° 23 d'un système de suroxygénation de cette eau n ° 24.Des canalisations de distribution alimentant les différentes rampes n ° 1 .De vannes d'isolement n°11. D'injecteurs 2 d'eau 3 avec aspiration d 'air par Venturi ou autres , le container selon l'invention n° 12. L'eau qui s'écoulera du ou des containers quand ils sont empilés n° 13, sera collectées dans un ou plusieurs regards n° 14. Une ou plusieurs canalisations de rejet n° 15 alimentera le container dégrilleur n° 16. Ceci est dans le cas d'un circuit fermé. Le procédé de l'invention peut très bien fonctionner en circuit ouvert avec une chaîne de traitements différents, ou en circuit fermé avec l'adaptation ou la surpression des organes de traitements cités ou non.

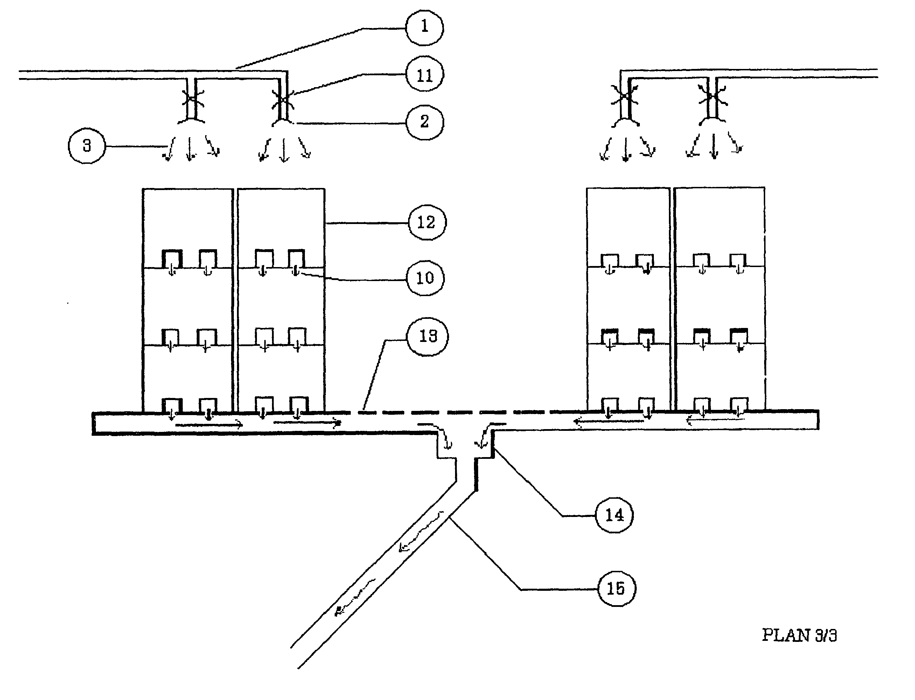

En référence aux figures de l'invention, (fig.3) comporte en 1 les canalisations de distribution, les vannes d'isolement n° 11 survie des injecteurs 2 d'eau en n° 3 des containers selon l' invention empilables ou non n ° 12 des eaux d'écoulement 10 du rejet après avoir alimenté les différents containers n° 13 du regard n° 14 et de la canalisation générale de rejet n°15.

A titre d'exemple non limitatif, les containers auront pour dimension 1.20 m de longueur, 1 m de largeur, et 0.98 m en hauteur. Le dispositif selon l'invention est destiné au stockage et au dégorgement des crustacés, coquillages, poissons ou autres en eau de mer ou eau douce.

## Revendications

1. Dispositif de stockage et de dégorgement des coquillages, crustacés, poissons ou autres, qui permet de les conserver et de les purifier régulièrement pendant plusieurs jours, **caractérisé par le fait qu'**il consiste en un réservoir d'eau à double fond (8) ménageant un espace de sédimentation (9), et en ce qu'au moins deux de ses faces opposées comprennent plusieurs tubes (5) remontant en partie haute et redescendant par un autre tube (6) juxtaposé conduisant à sa partie basse, laquelle est munie de canalisations d'écoulement d'eau calibrées et interchangeables (10).

2. Ensemble de stockage et de dégorgement des coquillages, crustacés, poissons ou autres, qui permet de les conserver et de les purifier régulièrement pendant plusieurs jours, **caractérisé par le fait qu'**il consiste en un empilement de dispositifs conformes à la revendication 1, et qu'il comprend des moyens d'alimentation en eau, assurant une circulation d'eau en cascade, les eaux d'écoulement du réservoir le plus haut assurant la circulation dans ceux qui se trouvent en dessous.

3. Procédé d'alimentation et de circulation en eau de mer ou douce de l'ensemble de stockage et de dégorgement des coquillages, crustacés, poissons ou autres selon la revendication 2, **caractérisé en ce qu'**il consiste à pomper par l'intermédiaire d'une aspiration (18) de l'eau dans une réserve (17), puis la filtrer, la stériliser, à assurer sa filtration biologique, et à la réchauffer ou à la refroidir, puis à la distribuer dans ledit ensemble.

4. Procédé selon la revendication 3, **caractérisé par le fait qu'**il consiste également à injecter de l'oxygène dans l'eau.

## Patentansprüche

1. Vorrichtung zum Lagern und zum Entwässern von Schalen- und Krustentieren, Fischen oder anderen, die es erlaubt, sie zu konservieren und sie während mehrerer Tage regelmäßig zu reinigen, **dadurch gekennzeichnet, dass** sie aus einem Wasserreservoir mit doppeltem Boden (8), der einen Sedimentationsraum (9) enthält, besteht und dass mindestens zwei ihrer einander gegenüberliegenden Seiten mehrere Rohre (5) umfassen, die zum oberen Teil hinaufgehen und über ein anderes danebenliegendes Rohr (6) hinuntergehen, das zu ihrem unteren Teil führt, welches mit kalibrierten und austauschbaren Wasserabflusskanälen (10) ausgerüstet ist.

2. Anordnung zum Lagern und zum Entwässern von Schalen- und Krustentieren, Fischen oder anderen, die es erlaubt, sie zu konservieren und sie während mehrerer Tage regelmäßig zu reinigen, **dadurch gekennzeichnet, dass** sie aus einem Stapel von Vorrichtungen nach Anspruch 1 besteht und dass sie Wasserzufuhrmittel umfasst, die eine Wasserzirkulation in Stufen sicherstellt, wobei der Wasserabfluss aus dem obersten Reservoir die Zirkulation in den darunterliegenden sicherstellt.

3. Verfahren zur Zufuhr und Zirkulation von Meer- und Süßwasser für die Anordnung zum Lagern und zum Entwässern von Schalen- und Krustentieren, Fischen oder anderen nach Anspruch 2, **dadurch gekennzeichnet, dass** es darin besteht Wasser durch Saugwirkung (18) in eine Vorratskammer (17) zu pumpen, es dann zu filtern, es zu sterilisieren, seine biologische Filterung sicherzustellen und es zu erwärmen oder abzukühlen und dann in der Anordnung zu verteilen.

4. Verfahren nach Anspruch 3, **dadurch gekennzeichnet, dass** es auch darin besteht Sauerstoff in das Wasser zu injizieren.

## Claims

1. A device for storing and draining shell fish, crustaceans, fish, etc., enabling them to be conserved and purified regularly for several days, the device being **characterized by** the fact that it consists in a double-bottomed water tank (8) providing a sedimentation space (9), and in that at least two of its opposite faces include a plurality of tubes (5) rising to the upper portion and descending via another tube (6) that is juxtaposed and leads to the bottom portion, which bottom portion is provided with calibrated and interchangeable water flow pipes (10).

2. A storage assembly for storing and draining shell fish, crustaceans, fish, etc., enabling them to be conserved and purified regularly for several days, the assembly being **characterized by** the fact that it consists in a stack of devices according to claim 1, and that it comprises water feed means for causing the water to flow in cascade, water flowing from the highest tank providing flow in the tanks situated below.

3. A method of feeding and circulating sea water or fresh water to the storage assembly for storing and draining shell fish, crustaceans, fish, etc., according to claim 2, the method being **characterized in that** it consists in pumping water from a supply (17) via an intake (18), then filtering it, sterilizing it, subjecting it to biological filtering, and heating it or cooling it, and then delivering into said assembly.

4. A method according to claim 3, **characterized by** the fact that it also consists in injecting oxygen into the water.
